(19) Europäisches Patentamt / European Patent Office / Office européen des brevets

(11) **EP 4 651 461 A1**

(12) **EUROPEAN PATENT APPLICATION**
published in accordance with Art. 153(4) EPC

(43) Date of publication:
**19.11.2025 Bulletin 2025/47**

(21) Application number: **23942892.3**

(22) Date of filing: **29.06.2023**

(51) International Patent Classification (IPC):
**H04L 47/56** (2022.01)

(52) Cooperative Patent Classification (CPC):
**H04L 47/56**

(86) International application number:
**PCT/CN2023/104099**

(87) International publication number:
**WO 2025/000383 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **New H3C Technologies Co., Ltd.**
**Hangzhou, Zhejiang 310052 (CN)**

(72) Inventors:
• **GUO, Daorong**
  **Beijing 100102 (CN)**
• **WANG, Wei**
  **Beijing 100102 (CN)**
• **WEN, Guangliang**
  **Beijing 100102 (CN)**

(74) Representative: **Bandpay & Greuter**
**11, rue Christophe Colomb**
**75008 Paris (FR)**

(54) **DETERMINISTIC STREAM TRANSMISSION METHOD AND APPARATUS, AND ELECTRONIC DEVICE AND MACHINE-READABLE STORAGE MEDIUM**

(57) Embodiments of the present disclosure provide a deterministic flow transmission method and apparatus, an electronic device and a machine-readable storage medium. According to the embodiments, a VPFC of a deterministic flow is no longer planned according to d scheduling slots, for scheduling and transmitting the deterministic flow, configured for outgoing interfaces on network nodes, but according to $d*n$ scheduling slots. By planning the VPFC of the deterministic flow according to global scheduling slot numbers, it can be precisely determined by a head node of the deterministic flow based on the global slot numbers that the deterministic flow will be specifically scheduled in a certain scheduling slot (e.g., slot0) within a certain cycle, thereby improving utilization of the VPFC of the deterministic flow.

```
                        ┌─────────────────────────────────────────┐  ⟋201
                        │ Determine an orchestrating-calendar for  │
                        │             network nodes                │
                        └─────────────────────────────────────────┘
                                          │
                                          ▼
                        ┌─────────────────────────────────────────┐  ⟋202
                        │ Number scheduling slots in scheduling-   │
                        │ calendars in the orchestrating-calendar  │
                        │ to obtain global slot numbers of the     │
                        │            scheduling slots              │
                        └─────────────────────────────────────────┘
                                          │
                                          ▼
                        ┌─────────────────────────────────────────┐  ⟋203
                        │ Determine a VPFC of the deterministic    │
                        │ flow based on the global slot numbers    │
                        │ and a determined VPFP of the             │
                        │          deterministic flow              │
                        └─────────────────────────────────────────┘
```

FIG. 2

**Description**

**TECHNICAL FIELD**

The present disclosure relates to the network communication technology, and in particular, to a deterministic flow transmission method and apparatus, an electronic device, and a machine-readable storage medium.

**BACKGROUND**

In a deterministic network, to ensure transmission of a deterministic flow, usually a virtual periodic forwarding path (VPFP) of the deterministic flow needs to be constructed. The VPFP is obtained based on a forwarding path for transmitting the deterministic flow by adding a scheduling and forwarding mapping relation between any one node (except for a tail node) to a next-hop node in the forwarding path. The scheduling and forwarding mapping relation specifically refers to a mapping relation between a target scheduling slot for scheduling the deterministic flow and configured for a target outgoing interface (which is for transmitting the deterministic flow and in any one node except for the tail node in the forwarding path) and a target scheduling slot for scheduling the deterministic flow and configured for a target outgoing interface (which is for transmitting the deterministic flow and in a next-hop node in the forwarding path).

After the VPFP of the deterministic flow is determined, for a target scheduling slot of any one node in the VPFP, a target transmission resource for transmitting the deterministic flow in the target scheduling slot is planned out from available transmission resources corresponding to the target scheduling slot, that is, a virtual periodic forwarding channel (VPFC) for transmitting the deterministic flow is planned out in the VPFP.

In a specific application, a scheduling slot (e.g., the target scheduling slot mentioned above) configured for an outgoing interface of any one node corresponds to a forwarding queue, but due to resources constraint, a number of available forwarding queues on any one node is limited, and a number of scheduling slots corresponding to the limited number of forwarding queues is also limited, and correspondingly, a time range presented by the scheduling slots is also limited. Consequently, refined control is hard to be achieved during the above resource planning, and resources cannot be finely controlled, hence conflicts may occur between transmission resources planned for deterministic flows.

**SUMMARY**

Embodiments of the present disclosure provide a deterministic flow transmission method and apparatus, an electronic device and a machine-readable storage medium, so as to refine transmission resources of a deterministic flow based on a VPFC corresponding to a VPFP of the deterministic flow.

An embodiment of the present disclosure provides a deterministic flow transmission method, where the method is applied to a management control plane entity (MCPE), the MCPE is used to manage and control network nodes in a deterministic network, and the method includes:

determining an orchestrating-calendar for the network nodes in the deterministic network; where the orchestrating-calendar includes $n$ scheduling-calendars, $n>1$; any one of the scheduling-calendars includes $d$ scheduling slots configured for outgoing interfaces on the network nodes to schedule and transmit a deterministic flow, $d>1$;

numbering the scheduling slots in the scheduling-calendars in the orchestrating-calendar to obtain global slot numbers of the scheduling slots; where global slot numbers of any two scheduling slots are different;

determining a virtual periodic forwarding channel (VPFC) of the deterministic flow according to the global slot numbers and a determined virtual periodic forwarding path (VPFP) of the deterministic flow; where the VPFC of the deterministic flow includes: an identifier of the VPFP of the deterministic flow, the outgoing interfaces for scheduling and transmitting the deterministic flow on the nodes in the VPFP, a global scheduling slot number of each of the outgoing interfaces for scheduling and transmitting the deterministic flow, and an amount of data transmitted when the deterministic flow is scheduled in a scheduling slot corresponding to the global scheduling slot number; and

controlling a head node in the VPFP of the deterministic flow to create a resources registering table (RRT) based on the VPFC of the deterministic flow; where the RRT includes RRT entries corresponding to the global slot numbers, and each of the RRT entries includes: an identifier of the VPFC of the deterministic flow scheduled and transmitted in a scheduling slot corresponding to a global slot number corresponding to the RRT entry or an identifier of a virtual periodic forwarding channel queue (VQ) allocated to the VPFC, and an amount of data of the deterministic flow scheduled and transmitted in the scheduling slot; and each of the RRT entries is used to: according to the identifier of the VPFC in the RRT entry or the identifier of the VQ allocated to the VPFC and the amount of data, schedule deterministic data, satisfying the amount of data, cached in the VQ allocated to the VPFC to a corresponding forwarding queue.

An embodiment of the present disclosure provides a deterministic flow transmission method, where the method is applied to a network node in a deterministic network, and the method includes:

creating, by the node as a head node in a virtual periodic forwarding path (VPFP) of a deterministic flow, a resources registering table (RRT) based on a virtual periodic forwarding channel (VPFC) of the deterministic flow under control of a management control plane entity (MCPE); the VPFC of the deterministic flow includes: an identifier of the VPFP of the deterministic flow, outgoing interfaces for scheduling and transmitting the deterministic flow on nodes in the VPFP, a global scheduling slot number of each of the outgoing interfaces for scheduling and transmitting the deterministic flow, and an amount of data transmitted when the deterministic flow is scheduled in a scheduling slot corresponding to the global scheduling slot number; where global scheduling slot numbers are obtained by numbering scheduling slots in each of scheduling-calendars in an orchestrating-calendar, and global slot numbers of any two scheduling slots are different; the orchestrating-calendar includes $n$ scheduling-calendars, $n>1$; any one of the scheduling-calendars includes $d$ scheduling slots configured for the outgoing interfaces on the network nodes to schedule and transmit the deterministic flow, $d>1$; the RRT includes RRT entries corresponding to the global slot numbers, and any one of the RRT entry includes: an identifier of the VPFC of the deterministic flow scheduled and transmitted in a scheduling slot corresponding to a global slot number corresponding to the RRT entry or an identifier of a virtual periodic forwarding channel queue (VQ) allocated to the VPFC, and an amount of data of the deterministic flow scheduled and transmitted in the scheduling slot;

scheduling, by the node as the head node in the VPFP of the deterministic flow, deterministic data, satisfying the amount of data, cached in the VQ allocated to the VPFC to a corresponding forwarding queue based on the identifier of the VPFC in an RRT entry or the identifier of the VQ allocated to the VPFC and the amount of data.

An embodiment of the present disclosure also provides a deterministic flow transmission apparatus, where the apparatus is applied to a management control plane entity (MCPE), the MCPE is used to manage and control network nodes in a deterministic network, and the apparatus includes:

an orchestrating unit, configured to determine an orchestrating-calendar for the network nodes in the deterministic network; where the orchestrating-calendar includes $n$ scheduling-calendars, $n>1$; any one of the scheduling-calendars includes d scheduling slots configured for outgoing interfaces on the network nodes to transmit a deterministic flow, $d>1$; and

number the scheduling slots in the scheduling-calendars in the orchestrating-calendar to obtain global slot numbers of the scheduling slots; where global slot numbers of any two scheduling slots are different;

a control unit, configured to determine a virtual periodic forwarding channel (VPFC) of the deterministic flow according to the global slot numbers and a determined virtual periodic forwarding path (VPFP) of the deterministic flow; where the VPFC of the deterministic flow includes: an identifier of the VPFP of the deterministic flow, the outgoing interfaces for scheduling and transmitting the deterministic flow on the nodes in the VPFP, a global scheduling slot number of each of the outgoing interfaces for scheduling and transmitting the deterministic flow, and an amount of data transmitted when the deterministic flow is scheduled in a scheduling slot corresponding to the global scheduling slot number; and

control a head node in the VPFP of the deterministic flow to create a resources registering table (RRT) based on the VPFC of the deterministic flow; where the RRT includes RRT entries corresponding to the global slot numbers, and each of the RRT entries includes: an identifier of the VPFC of the deterministic flow scheduled and transmitted in a scheduling slot corresponding to a global slot number corresponding to the RRT entry or an identifier of a virtual periodic forwarding channel queue (VQ) allocated to the VPFC, and an amount of data of the deterministic flow scheduled and transmitted in the scheduling slot; and each of the RRT entries is used to: according to the identifier of the VPFC in the RRT entry or the identifier of the VQ allocated to the VPFC and the amount of data, schedule deterministic data, satisfying the amount of data, cached in the VQ allocated to the VPFC to a corresponding forwarding queue.

An embodiment of the present disclosure also provides a deterministic flow transmission apparatus, where the apparatus is applied to a network node in a deterministic network, and the apparatus includes:

an entry unit, configured to, when the network node is a head node in a virtual periodic forwarding path (VPFP) of a deterministic flow, create a resources registering table (RRT) based on a virtual periodic forwarding channel (VPFC) of the deterministic flow under control of a management control plane entity (MCPE); the VPFC of the deterministic flow includes: an identifier of the VPFP of the deterministic flow, outgoing interfaces for scheduling and transmitting the deterministic flow on nodes in the VPFP, a global scheduling slot number of each of the outgoing interfaces for scheduling and transmitting the deterministic flow, and an amount of data transmitted when the deterministic flow is scheduled in a scheduling slot corresponding to the global scheduling slot number; where global scheduling slot numbers are obtained by numbering scheduling slots in each of scheduling-calendars in an orchestrating-calendar, and global slot numbers of any two scheduling slots are different; the orchestrating-calendar includes $n$ scheduling-calendars, $n>1$; any one of the scheduling-calendars includes $d$ scheduling slots configured for the outgoing interfaces on the network nodes to schedule and transmit the deterministic flow, $d>1$; the RRT includes RRT entries corresponding to the global slot numbers, and any one of the RRT entry includes: an identifier of the VPFC of the deterministic flow scheduled and transmitted in a scheduling slot corresponding to a global slot number corresponding to the RRT entry or an identifier of a virtual periodic forwarding channel queue (VQ) allocated to the VPFC, and an amount of data of the deterministic flow scheduled and transmitted in the scheduling slot;

a message-processing unit, configured to, when the network node is the head node in the VPFP of the deterministic flow, schedule deterministic data, satisfying the amount of data, cached in the VQ allocated to the VPFC to a corresponding forwarding queue based on the identifier of the VPFC in an RRT entry or the identifier of the VQ allocated to the VPFC and the amount of data.

An embodiment of the present disclosure also provides an electronic device, including: a processor and a machine-readable storage medium;

where the machine-readable storage medium stores a machine-executable instruction executable by the processor;
the processor is configured to execute the machine-executable instruction to implement the method according to any one of the above methods.

An embodiment of the present disclosure also provides a machine-readable storage medium, where the machine-readable storage medium stores a machine-executable instruction executable by a processor; the machine-executable instruction is executed by the processor to implement the method according to any one of the above methods.

As can be seen from the above technical solution, in the embodiments of the present disclosure, a VPFC of a deterministic flow is no longer planned according to $d$ scheduling slots, for scheduling and transmitting the deterministic flow, configured for outgoing interfaces on network nodes, but according to $d*n$ scheduling slots. By planning the VPFC of the deterministic flow according to global scheduling slot numbers, it can be precisely determined by a head node of the deterministic flow based on the global slot numbers that the deterministic flow will be specifically scheduled in a certain scheduling slot (e.g., slot0) within a certain cycle. For example, a packet forwarding period of a deterministic flow is 1000us, each scheduling slot is 10us, $d$ is 10. If it is precisely determined based on global slot numbers that in a slot0 of which cycle the deterministic flow will be scheduled (such as scheduled in a slot0 of a first cycle, a slot0 of a 10-th cycle, a slot0 of a 20-th cycle, and so on), slot0 in other cycles can still be used for scheduling other service flows, instead of occupying resources of slot0 in all cycles. In such way, utilization of the VPFC of the deterministic flow can reach to 100%, which is a really high utilization.

## BRIEF DESCRIPTION OF DRAWINGS

The accompanying drawings, which are incorporated in and constitute a part of this specification, illustrate embodiments consistent with the disclosure and together with the description, serve to illustrate the principles of the present disclosure.

FIG. 1 is a slot-queue structural diagram provided by an embodiment of the present disclosure.
FIG. 2 is a method flowchart provided by an embodiment of the present disclosure.
FIG. 3 is a schematic diagram showing numbering of slots of a scheduling-calendar provided by an embodiment of the present disclosure.
FIG. 4 is a structural diagram showing a MCPE controls a network node to create a resources registering table provided by an embodiment of the present disclosure.
FIG. 5 is a schematic diagram showing a resources registering table provided by an embodiment of the present disclosure.
FIG. 6 is another method flowchart provided by an embodiment of the present disclosure.
FIG. 7 is a message-processing architectural diagram provided by an embodiment of the present disclosure.
FIG. 8 is a structural diagram of an apparatus provided by an embodiment of the present disclosure.
FIG. 9 is another structural diagram of an apparatus provided by an embodiment of the present disclosure.
FIG. 10 is a structural diagram of an electronic device provided by an embodiment of the present disclosure.

## DETAILED DESCRIPTION

Description will now be made in detail to illustrative embodiments, examples of which are shown in the accompanying drawings. When the following description refers to the drawings, unless otherwise indicated, same reference numerals in different drawings indicate the same or similar elements. Embodiments described in the following illustrative embodiments do not represent all embodiments consistent with the present disclosure.

In contrary, they are merely examples of apparatuses and methods consistent with some aspects of the present disclosure.

The terminologies used in the present disclosure are for the purpose of describing specific embodiments only and are not intended to limit the present disclosure. Singular forms "a", "the" and "said" used in the present disclosure are also intended to include plural forms, unless the context clearly indicates other meaning.

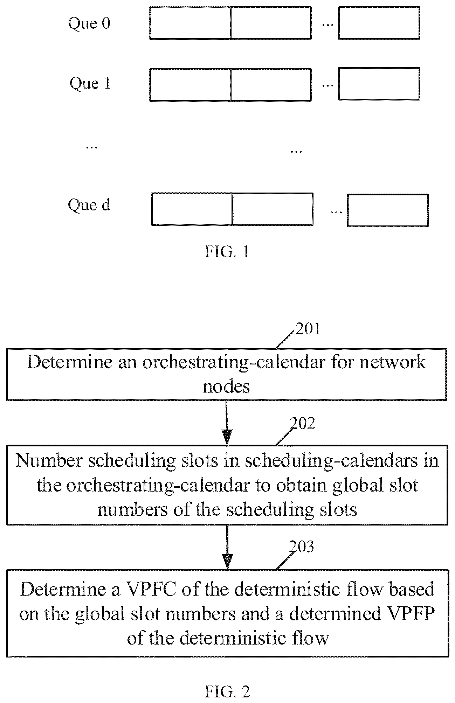

In a specific implementation, an outgoing interface on a network node in a deterministic network will be configured with $d$ scheduling slots to schedule and transmit a deterministic flow, where $d>1$. The $d$ scheduling slots correspond to $d$ scheduling queues, and this structure is illustratively shown in FIG. 1. Correspondingly, the $d$ scheduling slots corresponding to the $d$ scheduling queues are also presented in a control plane, such as a management control plane entity (MCPE). Thus, based on the $d$ scheduling slots, a VPFC for transmitting the deterministic flow will be planned within a deterministic flow-based VPFP, and for example, the VPFC planned out is:

> { (VPFP0): (intf0, Slot0, 1), // representing an outgoing interface intf0 for scheduling the deterministic flow on a head node of VPFP0 occupies 1 unit of transmission resource for transmission in a first scheduling slot Slot0;
> (VPFP0): (intf0, Slot1, 1), // representing an outgoing interface intf0 for scheduling the deterministic flow on a second node of VPFP0 occupies 1 unit of transmission resource for transmission in a second scheduling slot Slot1;

A head node of the VPFP of the deterministic flow only knows to schedule the deterministic flow in a certain scheduling slot (for example, the above mentioned Slot0), but does not know to forward the deterministic flow in the Slot0 of which cycle (the above d scheduling slots form one cycle), that is, resources cannot be finely controlled. Since the resources cannot be finely controlled, a low utilization of the VPFC of the deterministic flow is caused. For example, it is assumed that a packet forwarding period of the deterministic flow is 1000us, and each scheduling slot is 10us, then utilization of the VPFC of the deterministic flow will only reach 10%, which is a really low utilization.

To solve the above technical problem, embodiments of the present disclosure expand the d scheduling slots/scheduling queues which are for scheduling and transmitting the deterministic flow and configured for the outgoing interface on the network node on the control plane through the MCPE, and a flow of which if specifically shown in FIG. 2.

Referring to FIG. 2, FIG. 2 is a method flowchart provided by an embodiment of the present disclosure. The method is applied to MCPE, and the MCPE is used to manage and control network nodes in a deterministic network.

As shown in FIG. 2, the flow may include following steps:

Step 201, determining an orchestrating-calendar for network nodes.

In the present embodiment, the orchestrating-calendar includes $n$ scheduling-calendars, n>1, which can be determined according to actual service demands such as packet forwarding periods of deterministic flows through the network nodes, which is not specifically limited by the present embodiment.

In the present embodiment, any one of the scheduling-calendars includes d scheduling slots which are for scheduling and transmitting the deterministic flow and configured for outgoing interfaces on the network nodes, d>1. As described above, the d scheduling slots configured for the outgoing interfaces on the network nodes correspond to d scheduling queues configured to the outgoing interfaces on the network nodes.

For example, d is 10 and $n$ is 10, which represents that 10 scheduling slots uniformly configured by the MCPE for the outgoing interfaces of the network nodes are expanded to 10*10 (i.e., 100) scheduling slots uniformly configured for the outgoing interfaces of the network nodes, so as to achieve finer planning of resources, which will be further described in detail in the following.

Step 202, numbering scheduling slots in scheduling-calendars in the orchestrating-calendar to obtain global slot numbers of the scheduling slots.

In the present embodiment, all scheduling slots in all scheduling-calendars in the orchestrating-calendar can be globally numbered in time sequence, to form global slot numbers. Global slot numbers of any two scheduling slots are different.

In an embodiment, the scheduling-calendars can be ranked in a time sequence, and for each of the scheduling-calendars, if the scheduling-calendar is a first scheduling-calendar in the orchestrating-calendar, the scheduling slots in the scheduling-calendar are numbered in sequence starting from a preset initial value (e.g., 0); if the scheduling-calendar is not the first scheduling-calendar in the orchestrating-calendar, acquiring a start numbering value by adding a preset value on a number of a last scheduling slot in a previous scheduling-calendar, and the scheduling slots in the scheduling-calendar are numbered in sequence starting from the start numbering value. For example:

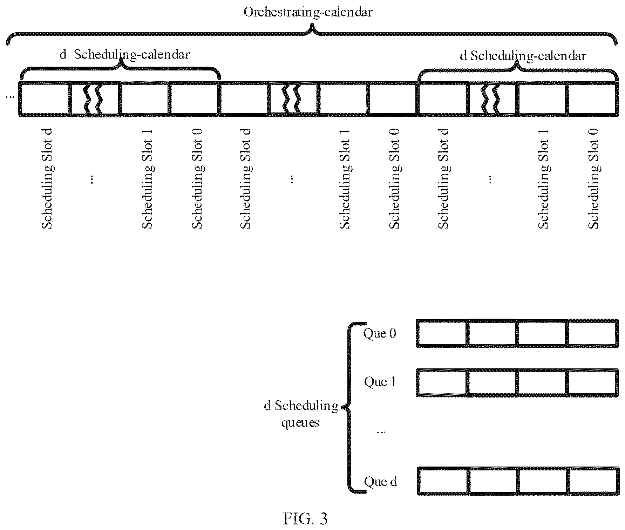

> a), slot numbers 0, 1, ..., d-1 of a first scheduling-calendar correspond to global slot numbers 0, 1, ..., d-1;
> b), slot numbers 0, 1, ..., d-1 of a second scheduling-calendar correspond to global slot numbers d, d+1, ..., 2d-1;
> c), slot numbers 0, 1, ..., d-1 of a k-th scheduling-calendar correspond to global slot numbers (k-1)*d, (k-1)*d+1, ..., k*d-1; and so on. FIG. 3 illustratively shows slot numbers of scheduling-calendars.

Step 203, determining a VPFC of the deterministic flow based on the global slot numbers and a determined VPFP of the deterministic flow.

The VPFC determined in the present embodiment is different from an existing VPFC, the planning is not performed based on the $d$ scheduling slots for scheduling and transmitting the deterministic flow configured for the outgoing interfaces on the network nodes, but based on $d*n$ scheduling slots. Specifically, when planning the VPFC, after a global scheduling slot number for scheduling and transmitting the deterministic flow of an outgoing interface for scheduling and transmitting the deterministic flow on a head node in the VPFP of the deterministic flow is planned out, a global scheduling slot number for scheduling and transmitting the deterministic flow of an outgoing interface for scheduling and transmitting the deterministic flow on any one node except for the head node in the VPFP is determined by: $y=(x+k)$ mod $M$; where y represents the global scheduling slot number, for scheduling and transmitting the deterministic flow, of the outgoing interface, for scheduling and transmitting the deterministic flow, on a current node; x represents a global scheduling slot number, for scheduling and transmitting the deterministic flow, of an outgoing interface, for scheduling and transmitting the deterministic flow, on a previous node relative to the current node, x ranges according to $\{x \mid 0 \leq x < M, x$ belongs to a natural number$\}$, $M$ represents a product of $n$ and $d$; $k$ is a calibrated value corresponding to the current node, adjacent nodes in the VPFP correspond to a same value or different values of $k$, $k$ ranges according to $\{k \mid 0 \leq k < d, k$ belongs to a natural number$\}$ .

In an embodiment, the calibrated value $k$ corresponding to the current node is determined according to an offset between scheduling slots, for scheduling and transmitting the deterministic flow, of outgoing interfaces, for scheduling and transmitting the deterministic flow, of the current node and the previous node. The offset is determined by:

$$\text{Offset} = (d+j-i) \ \% \ d;$$

where $i$ represents a scheduling slot, for scheduling and transmitting the deterministic flow, of the outgoing interface, for scheduling and transmitting the deterministic flow, on the previous node relative to the current node ($i \leq d$); and $j$ represents a scheduling slot, for scheduling and transmitting the deterministic flow, of the outgoing interface, for scheduling and transmitting the deterministic flow, on the current node ($j \leq d$).

Based on the above description, in step 202, the VPFC of the deterministic flow at least includes: an identifier of the VPFP of the deterministic flow, the outgoing interfaces for scheduling and transmitting the deterministic flow on the nodes in the VPFP, a global scheduling slot number of each of the outgoing interfaces for scheduling and transmitting the deterministic flow, and an amount of data transmitted when the deterministic flow is scheduled in a scheduling slot corresponding to the global scheduling slot number (the amount of data can be planned according to test, which can be referred to from existing planning of amounts of data).

Step 203, controlling a head node in the VPFP of the deterministic flow to create a resources registering table (RRT) based on the VPFC of the deterministic flow.

In an embodiment, the MCPE can construct the RRT corresponding to the head node in the VPFP of the deterministic flow and send the RRT to the head node, so as to achieve controlling the head node in the VPFP of the deterministic flow to create the resources registering table (RRT) based on the VPFC of the deterministic flow described in step 203.

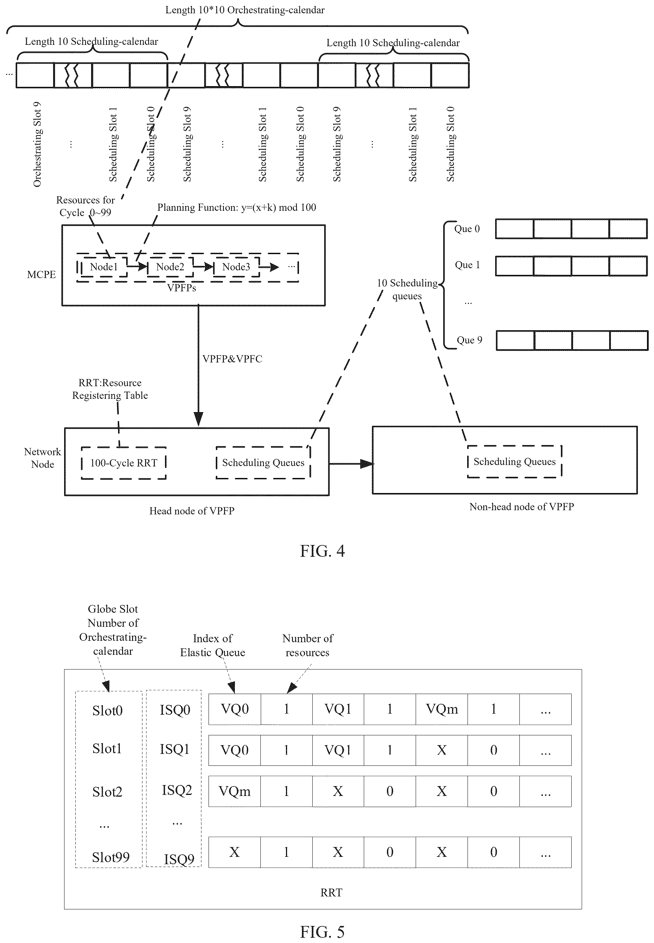

In another embodiment, the MCPE can send related parameters of the RRT (information required to construct the RRT) corresponding to the head node in the VPFP of the deterministic flow to the head node, so that the head node constructs the RRT based on the received parameters, so as to finally achieve controlling the head node in the VPFP of the deterministic flow to create the resources registering table (RRT) based on the VPFC of the deterministic flow described in step 203. FIG. 4 illustratively shows a structure describing how the MCPE controls the network nodes to create the resources registering table.

In the present embodiment, the RRT includes RRT entries corresponding to the global slot numbers. For example, a number of RRT entries in the RRT is $M$, and $M$ represents a product of $n$ and $d$. In the present embodiment, any one of the RRT entries includes: an identifier of the VPFC of the deterministic flow scheduled and transmitted in a scheduling slot corresponding to a global slot number corresponding to the RRT entry or an identifier of a virtual periodic forwarding channel queue (VQ) allocated to the VPFC, and an amount of data of the deterministic flow scheduled and transmitted in the scheduling slot. In a specific implementation, in the RRT, a first RRT entry corresponds to a smallest global slot number, a second RRT entry corresponds to a second-smallest global slot number, ..., and a last RRT entry corresponds to a greatest global slot number. FIG. 5 shows an RRT by taking VQ as an example.

In the present embodiment, the RRT entry is used to schedule deterministic data, satisfying the amount of data, cached in the VQ allocated to the VPFC to a corresponding forwarding queue according to the identifier of the VPFC in the RRT entry or the identifier of the VQ allocated to the VPFC and the amount of data, which will be described in detail from a perspective of the network node in the following, and will not be explicitly described here.

At this point, the process shown in FIG. 2 is completed.

According to the process shown in FIG. 2, the embodiments achieves that a VPFC of a deterministic flow is no longer planned according to $d$ scheduling slots, for scheduling and transmitting the deterministic flow, configured for outgoing interfaces on network nodes, but according to $d*n$ scheduling slots. By planning the VPFC of the deterministic flow according to global scheduling slot numbers, it can be precisely determined by a head node of the deterministic flow based on the global slot numbers that the deterministic flow will be specifically scheduled in a certain scheduling slot (e.g., slot0) within a certain cycle. For example, a packet forwarding period of a deterministic flow is 1000us, each scheduling slot is 10us, $d$ is 10. If it is precisely determined based on global slot numbers that in a slot0 of which cycle the deterministic flow will be scheduled (such as scheduled in a slot0 of a first cycle, a slot0 of a 10-th cycle, a slot0 of a 20-th cycle, and so on), slot0 in other cycles can still be used for scheduling other service flows, instead of occupying resources of slot0 in all cycles. In such way, utilization of the VPFC of the deterministic flow can reach to 100%, which is a really high utilization.

The method provided by the embodiments of the present disclosure will be described in detail from a perspective of a network node in the following.

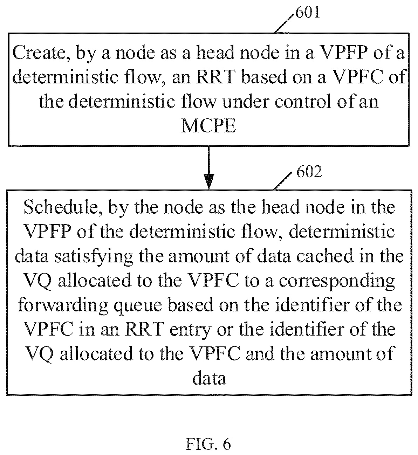

Referring to FIG. 6, FIG. 6 is another method flowchart provided by an embodiment of the present disclosure. The process is applied to a network node in a deterministic network. As shown in FIG. 6, the flow may include following steps:

Step 601, creating, by the node as a head node in a VPFP of a deterministic flow, an RRT based on a VPFC of the deterministic flow under control of an MCPE.

Step 601 corresponds to step 203 in the process shown in FIG. 2, which will not be repeated here.

Step 602, scheduling, by the node as the head node in the VPFP of the deterministic flow, deterministic data satisfying the amount of data cached in the VQ allocated to the VPFC to a corresponding forwarding queue based on the identifier of the VPFC in an RRT entry or the identifier of the VQ allocated to the VPFC and the amount of data.

Before step 602, as the head node in the VPFP of the deterministic flow, after receiving a deterministic data message belonging to the deterministic flow, the node will cache the deterministic data message to the VQ allocated to the VPFC of the deterministic flow.

Based on this, scheduling deterministic data satisfying the amount of data cached in the VQ allocated to the VPFC to a corresponding forwarding queue according to the identifier of the VPFC in an RRT entry or the identifier of the VQ allocated to the VPFC and the amount of data may include:

Step 1), in a current slot, determining, in the RRT, a target RRT entry corresponding to a next slot relative to the current slot; where the current slot is a timeslot corresponding to a global slot number currently indicated by a slot counter, the slot counter indicates a global slot number every slot interval (e.g., 10us), the slot counter is allowed to indicate a number $M$ of global slot numbers, $M$ represents a product of $n$ and $d$, and the slot counter is reset every $M$ slot intervals; the next slot is a timeslot corresponding to a next global slot number indicated by the slot counter. In the present embodiment, the slot interval refers to a slot interval between two adjacent scheduling slots in the $d$ scheduling slots for scheduling and transmitting the deterministic flow configured for the outgoing interfaces on the network nodes, for example, 10us as mentioned above.

Step 2), acquiring, based on the identifier of the VPFC in the target RRT entry or the identifier of the VQ and the amount of data, at least one deterministic data message from the VQ corresponding to the identifier, where an amount of data of the acquired at least one deterministic data message is smaller than or equal to the amount of data in the target RRT entry; for each of the acquired at least one deterministic data message, determining whether the deterministic data message is an expired message based on a receiving moment when the deterministic data message is received and a current moment; and if the deterministic data message is not the expired message, storing the deterministic data message to the corresponding forwarding queue.

In an embodiment, above for each of the acquired at least one deterministic data message, determining whether the deterministic data message is an expired message based on a receiving moment when the deterministic data message is received and a current moment includes: for each of the acquired at least one deterministic data message, calculating a time difference between the receiving moment when the deterministic data message is received and the current moment, checking whether the time difference is greater than a time delay required by the deterministic flow to which the deterministic data message belongs; and if the time difference is greater than the time delay, determining the deterministic data message as the expired message; and if the time difference is less than or equal to the time delay, determining that the deterministic data message is not the expired message. The time delay required by the deterministic flow to which the deterministic data message belongs can be configured in advance, which is not specifically limited by the present embodiment. In the present embodiment, if the deterministic data message is determined as the expired message, the expired message can be discarded.

In addition, in an embodiment, in above step 1), in the current slot, the global slot number of the current slot is mapped to a corresponding scheduling slot configured for an outgoing interface, for scheduling and transmitting the deterministic data message, on the node; and the deterministic data message in the forwarding queue corresponding to the scheduling slot is scheduled. The global scheduling slot numbers ensure that the above head node can precisely determine the deterministic data message is scheduled in a certain scheduling slot of a certain cycle (if the outgoing interface is configured with $d$ scheduling slots, the cycle can be determined through a global slot number /d of a current slot), so that resources in the scheduling slot of other cycles can be fully used to schedule other deterministic flows, thereby improving resource utilization.

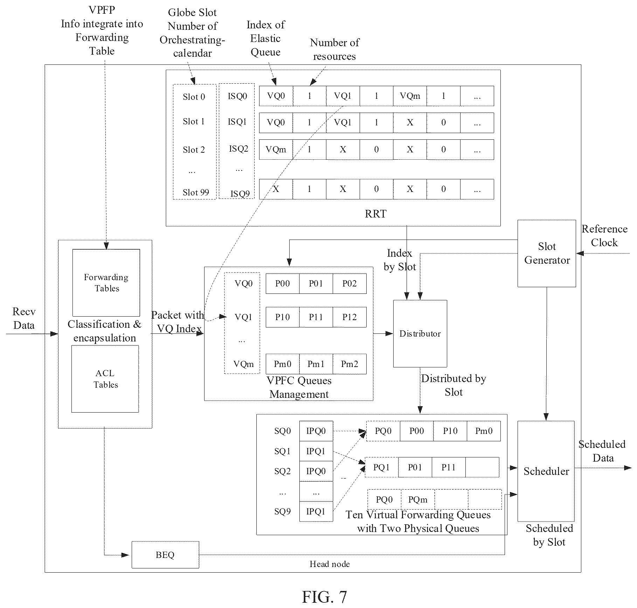

In addition, in the present embodiment, the $d$ scheduling slots for scheduling and transmitting the deterministic flow configured for the outgoing interfaces correspond to $d$ forwarding queue identifiers (indexes of sending queue, ISQ), every $d$ RRT entries in the RRT form a group, $d$ is even (e.g., $d$ is 10), and RRT entries in each group are configured with corresponding ISQs in sequence; every 2 ISQs in the $d$ ISQs form a group, and ISQs in each group are mapped to corresponding physical queues in sequence, and different ISQs in each group are mapped to different physical queues; based on this, the forwarding queue refers to a physical queue to which the ISQ corresponding to the target RRT entry is mapped to. FIG. 7 illustrates a structure showing a network node, as a head node of a deterministic flow, receives a deterministic data message belonging to the deterministic flow from external.

At this point, the process shown in FIG. 6 is completed.

According to the process shown in FIG. 6, the embodiments achieves that a VPFC of a deterministic flow is no longer planned according to $d$ scheduling slots, for scheduling and transmitting the deterministic flow, configured for outgoing interfaces on network nodes, but according to $d*n$ scheduling slots. By planning the VPFC of the deterministic flow according to global scheduling slot numbers, it can be precisely determined by a head node of the deterministic flow based on the global slot numbers that the deterministic flow will be specifically scheduled in a certain scheduling slot (e.g., slot0) within a certain cycle. For example, a packet forwarding period of a deterministic flow is 1000us, each scheduling slot is 10us, $d$ is 10. If it is precisely determined based on global slot numbers that in a slot0 of which cycle the deterministic flow will be scheduled (such as scheduled in a slot0 of a first cycle, a slot0 of a 10-th cycle, a slot0 of a 20-th cycle, and so on), slot0 in other cycles can still be used for scheduling other service flows, instead of occupying resources of slot0 in all cycles. In such way, utilization of the VPFC of the deterministic flow can reach to 100%, which is a really high utilization.

The method provided by the embodiments of the present disclosure is described above, and a system and an apparatus provided by embodiments of the present disclosure will be described in the following.

A system provided by an embodiment of the present disclosure mainly includes: a MCPE and a network node in a deterministic network. The MCPE performs the process shown in FIG. 2, and the network node performs the process shown in FIG. 6.

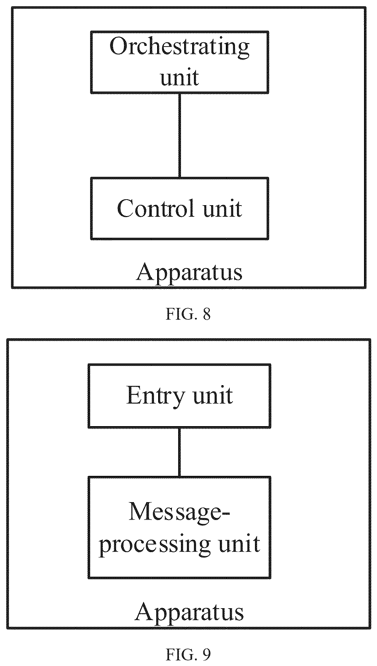

Referring to FIG. 8, FIG. 8 is a structural diagram of an apparatus provided by an embodiment of the present disclosure. The apparatus is applied to a MCPE, the MCPE is used to manage and control network nodes in a deterministic network, and the apparatus includes:

an orchestrating unit, configured to determine an orchestrating-calendar for the network nodes in the deterministic network; where the orchestrating-calendar includes $n$ scheduling-calendars, $n>1$; any one of the scheduling-calendars includes $d$ scheduling slots configured for outgoing interfaces on the network nodes to transmit a deterministic flow, $d>1$; and

number the scheduling slots in the scheduling-calendars in the orchestrating-calendar to obtain global slot numbers of the scheduling slots; where global slot numbers of any two scheduling slots are different;

a control unit, configured to determine a virtual periodic forwarding channel (VPFC) of the deterministic flow according to the global slot numbers and a determined virtual periodic forwarding path (VPFP) of the deterministic flow; where the VPFC of the deterministic flow includes: an identifier of the VPFP of the deterministic flow, the outgoing interfaces for scheduling and transmitting the deterministic flow on the nodes in the VPFP, a global scheduling slot number of each of the outgoing interfaces for scheduling and transmitting the deterministic flow, and an amount of data transmitted when the deterministic flow is scheduled in a scheduling slot corresponding to the global scheduling slot number; and

control a head node in the VPFP of the deterministic flow to create a resources registering table (RRT) based on the VPFC of the deterministic flow; where the RRT includes RRT entries corresponding to the global slot numbers, and each of the RRT entries includes: an identifier of the VPFC of the deterministic flow scheduled and transmitted in a scheduling slot corresponding to a global slot number corresponding to the RRT entry or an identifier of a virtual periodic forwarding channel queue (VQ) allocated to the VPFC, and an amount of data of the deterministic flow scheduled and transmitted in the scheduling slot; and each of the RRT entries is used to: according to the identifier of the VPFC in the RRT entry or the identifier of the VQ allocated to the VPFC and the amount of data, schedule deterministic data, satisfying the amount of data, cached in the VQ allocated to the VPFC to a corresponding forwarding queue.

In an embodiment, numbering the scheduling slots in the scheduling-calendars in the orchestrating-calendar to obtain global slot numbers of the scheduling slots includes:

ranking the scheduling-calendars in a time sequence, and for each of the scheduling-calendars, if the scheduling-calendar is a first scheduling-calendar in the orchestrating-calendar, numbering the scheduling slots in the scheduling-calendar in sequence starting from a preset initial value; if the scheduling-calendar is not the first scheduling-calendar in the orchestrating-calendar, acquiring a start numbering value by adding a preset value on a number of a last scheduling slot in a previous scheduling-calendar, and numbering the scheduling slots in the scheduling-calendar in sequence starting from the start numbering value.

In an embodiment, a global scheduling slot number, for scheduling and transmitting the deterministic flow, of an outgoing interface, for scheduling and transmitting the deterministic flow, on any one node in the VPFP of the deterministic flow is determined by:

$$y = (x+k) \bmod M;$$

where y represents the global scheduling slot number, for scheduling and transmitting the deterministic flow, of the outgoing interface, for scheduling and transmitting the deterministic flow, on a current node, and the current node represents any one node in the VPFP of the deterministic flow except for the head node; x represents a global scheduling slot number, for scheduling and transmitting the deterministic flow, of an outgoing interface, for scheduling and transmitting the deterministic flow, on a previous node relative to the current node, x ranges according to $\{x \mid 0 \leq x < M,$ x belongs to a natural number$\}$; k is a calibrated value corresponding to the current node, adjacent nodes in the VPFP correspond to a same value or different values of k, k ranges according to $\{k \mid 0 \leq k < d,$ k belongs to a natural number$\}$; and M represents a product of n and d.

In an embodiment, the calibrated value k corresponding to the current node is determined according to offset between scheduling slots, for scheduling and transmitting the deterministic flow, of outgoing interfaces, for scheduling and transmitting the deterministic flow, of the current node and the previous.

The offset is determined by:

$$\text{Offset} = (d+j-i) \% d;$$

where i represents a scheduling slot, for scheduling and transmitting the deterministic flow, of the outgoing interface, for scheduling and transmitting the deterministic flow, on the previous node relative to the current node; and j represents a scheduling slot, for scheduling and transmitting the deterministic flow, of the outgoing interface, for scheduling and transmitting the deterministic flow, on the current node.

In an embodiment, a number of RRT entries in the RRT is M, and M represents a product of n and d.

In the RRT, a first RRT entry corresponds to a smallest global slot number, a second RRT entry corresponds to a second-smallest global slot number, ..., and a last RRT entry corresponds to a greatest global slot number.

At this point, structural description of the apparatus shown in FIG. 8 is completed.

Referring to FIG. 9, FIG. 9 is another structural diagram of an apparatus provided by an embodiment of the present disclosure. The apparatus is applied to a network node in a deterministic network, and the apparatus includes:

an entry unit, configured to, when the network node is a head node in a virtual periodic forwarding path (VPFP) of a deterministic flow, create a resources registering table (RRT) based on a virtual periodic forwarding channel (VPFC) of the deterministic flow under control of a management control plane entity (MCPE); the VPFC of the deterministic flow includes: an identifier of the VPFP of the deterministic flow, outgoing interfaces for scheduling and transmitting the deterministic flow on nodes in the VPFP, a global scheduling slot number of each of the outgoing interfaces for scheduling and transmitting the deterministic flow, and an amount of data transmitted when the deterministic flow is scheduled in a scheduling slot corresponding to the global scheduling slot number; where global scheduling slot numbers are obtained by numbering scheduling slots in each of scheduling-calendars in an orchestrating-calendar, and global slot numbers of any two scheduling slots are different; the orchestrating-calendar includes n scheduling-calendars, n>1; any one of the scheduling-calendars includes d scheduling slots configured for the outgoing interfaces on the network nodes to schedule and transmit the deterministic flow, d>1; the RRT includes RRT entries corresponding to the global slot numbers, and any one of the RRT entry includes: an identifier of the VPFC of the deterministic flow scheduled and transmitted in a scheduling slot corresponding to a global slot number corresponding to the RRT entry or an identifier of a virtual periodic forwarding channel queue (VQ) allocated to the VPFC, and an amount of data of the deterministic flow scheduled and transmitted in the scheduling slot;

a message-processing unit, configured to, when the network node is the head node in the VPFP of the deterministic flow, schedule deterministic data, satisfying the amount of data, cached in the VQ allocated to the VPFC to a corresponding forwarding queue based on the identifier of the VPFC in an RRT entry or the identifier of the VQ allocated to the VPFC and the amount of data.

In an embodiment, the message-processing unit is further configured to receive, at the node, a deterministic data message; and when the node is the head node of the deterministic flow to which the deterministic data message belongs, cache the deterministic data message in the VQ allocated to the VPFC of the deterministic flow;

> scheduling deterministic data, satisfying the amount of data, cached in the VQ allocated to the VPFC to a corresponding forwarding queue according to the identifier of the VPFC in an RRT entry or the identifier of the VQ allocated to the VPFC and the amount of data includes:
> in a current slot, determining, in the RRT, a target RRT entry corresponding to a next slot relative to the current slot; where the current slot is a timeslot corresponding to a global slot number currently indicated by a slot counter, the slot counter indicates a global slot number every slot interval, the slot counter is allowed to indicate a number $M$ of global slot numbers, $M$ represents a product of $n$ and $d$, and the slot counter is reset every $M$ slot intervals; the next slot is a timeslot corresponding to a next global slot number indicated by the slot counter;
> acquiring, based on the identifier of the VPFC in the target RRT entry or the identifier of the VQ and the amount of data, at least one deterministic data message from the VQ corresponding to the identifier, where an amount of data of the acquired at least one deterministic data message is smaller than or equal to the amount of data in the target RRT entry; for each of the acquired at least one deterministic data message, determining whether the deterministic data message is an expired message based on a receiving moment when the deterministic data message is received and a current moment; and if the deterministic data message is not the expired message, storing the deterministic data message to the corresponding forwarding queue.

In an embodiment, for each of the acquired at least one deterministic data message, determining whether the deterministic data message is an expired message based on a receiving moment when the deterministic data message is received and a current moment includes:
for each of the acquired at least one deterministic data message, calculating a time difference between the receiving moment when the deterministic data message is received and the current moment, checking whether the time difference is greater than a time delay required by the deterministic flow to which the deterministic data message belongs; and if the time difference is greater than the time delay, determining the deterministic data message as the expired message; and if the time difference is less than or equal to the time delay, determining that the deterministic data message is not the expired message.

In an embodiment, the message-processing unit is further configured to: in the current slot, map the global slot number of the current slot to a corresponding scheduling slot configured for an outgoing interface, for scheduling and transmitting the deterministic data message, on the node; and schedule the deterministic data message in the forwarding queue corresponding to the scheduling slot.

In an embodiment, the $d$ scheduling slots configured for the outgoing interfaces to schedule and transmit the deterministic flow correspond to $d$ indexes of sending queue, $d$ is even; every $d$ RRT entries in the RRT form a group, and RRT entries in each group are configured with corresponding ISQs in sequence; every 2 ISQs in the $d$ ISQs form a group, and ISQs in each group are mapped to corresponding physical queues in sequence, and different ISQs in each group are mapped to different physical queues;

the forwarding queue is a physical queue to which an ISQ corresponding to the target RRT entry is mapped to.

At this point, structural description of the apparatus shown in FIG. 9 is completed.

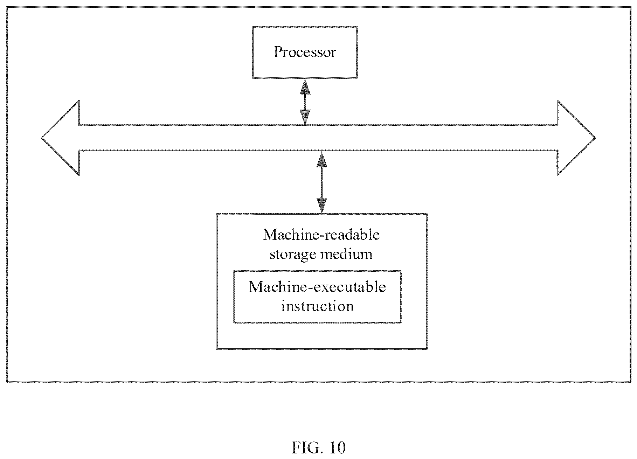

Embodiments of the present disclosure further provides a hardware structure of the above apparatus. FIG. 10 is a structural diagram of an electronic device provided by an embodiment of the present disclosure. As shown in FIG. 10, the hardware structure may include: a processor and a machine-readable storage medium, where the machine-readable storage medium stores a machine-executable instruction executable by the processor; the processor is configured to execute the machine-executable instruction to implement the method disclosed by the above embodiments of the present disclosure.

Based on a same concept of the above method, embodiments of the present disclosure further provide a machine-readable storage medium, where the machine-readable storage medium stores computer instructions, and when the computer instructions are executed by a processor, the method disclosed by the above embodiments of the present disclosure is implemented.

Illustratively, the machine-readable storage medium may be any electronic, magnetic, optical or other physical storage device, and can contain or store information, such as executable instructions, data, etc. For example, the machine-readable storage medium may be: RAM (Random Access Memory), volatile memory, non-volatile memory, flash memory, storage drive (such as hard disk drive), solid state disk, any type of storage disk (such as optical disk, DVD, etc.), or similar storage medium, or a combination thereof.

The systems, apparatuses, modules or units set forth in the above embodiments can be realized by computer chips or entities, or by products with certain functions. A typical implementation device is a computer, and a specific form of the computer can be a personal computer, a laptop computer, a cellular phone, a camera phone, a smart phone, a personal digital assistant, a media player, a navigation device, an email transceiver, a game console, a tablet computer, a wearable device or a combination of any of these devices.

For convenience of description, when describing the above apparatuses, the functions are divided into various units and are described separately. Certainly, the functions of each unit can be realized in one or more pieces of software and/or hardware when the application is implemented.

It should be understood by those skilled in the art that embodiments of the present disclosure can be provided as a method, a system, or a computer program product. Therefore, the present disclosure can take the form of an entirely hardware embodiment, an entirely software embodiment, or an embodiment combining software and hardware aspects. Furthermore, embodiments of the present application may take the form of computer program products implemented on one or more computer-usable storage medium (including but not limited to disk storage, CD-ROM, optical storage, etc.) containing computer-usable program codes.

The present disclosure is described with reference to flowcharts and/or block diagrams of methods, devices (systems), and computer program products according to embodiments of the present disclosure. It should be understood that each flow and/or block in the flowchart and/or block diagram, and combinations of the flow and/or block in the flowchart and/or block diagram can be implemented by computer program instructions. These computer program instructions may be provided to a processor of a general-purpose computer, special-purpose computer, embedded processor or other programmable data processing apparatus to produce a machine, such that the instructions which are executed by the processor of the computer or other programmable data processing apparatus produce means for implementing the functions specified in the flowchart flow or flows and/or block or blocks in the block diagram.

Moreover, these computer program instructions can also be stored in a computer-readable memory that can direct a computer or other programmable data processing apparatus to work in a specific manner, so that the instructions stored in the computer-readable memory produce an article of manufacture including instruction means that implement the functions specified in one flow or multiple flows of the flowchart and/or one block or multiple blocks of the block diagram.

These computer program instructions may also be loaded onto a computer or other programmable data processing apparatus, such that a series of operational steps are performed on the computer or other programmable apparatus to produce a computer-implemented process, such that the instructions executed on the computer or other programmable apparatus provide steps for implementing the functions specified in the flowchart flow or flows and/or block or blocks of the block diagram.

The above are embodiments of the present disclosure, and are not used to limit the present disclosure. For those of ordinary skills in the art, various modifications and variations may be made to the present disclosure. Any modification, equivalent substitution, improvement, etc. made within the spirit and principle of the present disclosure should be included in the scope of the claims of the present disclosure.

**Claims**

1. A deterministic flow transmission method, wherein the method is applied to a management control plane entity (MCPE), the MCPE is used to manage and control network nodes in a deterministic network, and the method comprises:

determining an orchestrating-calendar for the network nodes in the deterministic network; wherein the orchestrating-calendar comprises $n$ scheduling-calendars, $n>1$; any one of the scheduling-calendars comprises d scheduling slots configured for outgoing interfaces on the network nodes to schedule and transmit a deterministic flow, $d>1$;

numbering the scheduling slots in the scheduling-calendars in the orchestrating-calendar to obtain global slot numbers of the scheduling slots; wherein global slot numbers of any two scheduling slots are different;

determining a virtual periodic forwarding channel (VPFC) of the deterministic flow according to the global slot numbers and a determined virtual periodic forwarding path (VPFP) of the deterministic flow; wherein the VPFC of the deterministic flow comprises: an identifier of the VPFP of the deterministic flow, the outgoing interfaces for scheduling and transmitting the deterministic flow on the nodes in the VPFP, a global scheduling slot number of each of the outgoing interfaces for scheduling and transmitting the deterministic flow, and an amount of data transmitted when the deterministic flow is scheduled in a scheduling slot corresponding to the global scheduling slot number; and

controlling a head node in the VPFP of the deterministic flow to create a resources registering table (RRT) based on the VPFC of the deterministic flow; wherein the RRT comprises RRT entries corresponding to the global slot numbers, and each of the RRT entries comprises: an identifier of the VPFC of the deterministic flow scheduled and transmitted in a scheduling slot corresponding to a global slot number corresponding to the RRT entry or an identifier of a virtual periodic forwarding channel queue (VQ) allocated to the VPFC, and an amount of data of the deterministic flow scheduled and transmitted in the scheduling slot; and each of the RRT entries is used to: according to the identifier of the VPFC in the RRT entry or the identifier of the VQ allocated to the VPFC and the amount of data, schedule deterministic data, satisfying the amount of data, cached in the VQ allocated to the VPFC to a corresponding forwarding queue.

2. The method according to claim 1, wherein numbering the scheduling slots in the scheduling-calendars in the orchestrating-calendar to obtain global slot numbers of the scheduling slots comprises:
ranking the scheduling-calendars in a time sequence, and for each of the scheduling-calendars, if the scheduling-calendar is a first scheduling-calendar in the orchestrating-calendar, numbering the scheduling slots in the scheduling-calendar in sequence starting from a preset initial value; if the scheduling-calendar is not the first scheduling-calendar in the orchestrating-calendar, acquiring a start numbering value by adding a preset value on a number of a last scheduling slot in a previous scheduling-calendar, and numbering the scheduling slots in the scheduling-calendar in sequence starting from the start numbering value.

3. The method according to claim 1, wherein a global scheduling slot number, for scheduling and transmitting the deterministic flow, of an outgoing interface, for scheduling and transmitting the deterministic flow, on any one node in the VPFP of the deterministic flow is determined by:

$$y = (x+k) \bmod M;$$

wherein y represents the global scheduling slot number, for scheduling and transmitting the deterministic flow, of the outgoing interface, for scheduling and transmitting the deterministic flow, on a current node, and the current node represents any one node in the VPFP of the deterministic flow except for the head node; x represents a global scheduling slot number, for scheduling and transmitting the deterministic flow, of an outgoing interface, for scheduling and transmitting the deterministic flow, on a previous node relative to the current node, x ranges according to $\{x \mid 0 \le x < M, x$ belongs to a natural number$\}$; $k$ is a calibrated value corresponding to the current node, adjacent nodes in the VPFP correspond to a same value or different values of $k$, $k$ ranges according to $\{k \mid 0 \le k < d, k$ belongs to a natural number$\}$; and $M$ represents a product of $n$ and $d$.

4. The method according to claim 3, wherein the calibrated value $k$ corresponding to the current node is determined according to an offset between scheduling slots, for scheduling and transmitting the deterministic flow, of outgoing interfaces, for scheduling and transmitting the deterministic flow, of the current node and the previous node;

wherein the offset is determined by:

$$\text{Offset} = (d+j-i) \% d;$$

wherein $i$ represents a scheduling slot, for scheduling and transmitting the deterministic flow, of the outgoing interface, for scheduling and transmitting the deterministic flow, on the previous node relative to the current node; and $j$ represents a scheduling slot, for scheduling and transmitting the deterministic flow, of the outgoing interface, for scheduling and transmitting the deterministic flow, on the current node.

5. The method according to claim 1, wherein a number of RRT entries in the RRT is $M$, and $M$ represents a product of $n$ and $d$;
in the RRT, a first RRT entry corresponds to a smallest global slot number, a second RRT entry corresponds to a second-smallest global slot number, ..., and a last RRT entry corresponds to a greatest global slot number.

6. A deterministic flow transmission method, wherein the method is applied to a network node in a deterministic network, and the method comprises:

creating, by the node as a head node in a virtual periodic forwarding path (VPFP) of a deterministic flow, a resources registering table (RRT) based on a virtual periodic forwarding channel (VPFC) of the deterministic flow under control of a management control plane entity (MCPE); the VPFC of the deterministic flow comprises: an identifier of the VPFP of the deterministic flow, outgoing interfaces for scheduling and transmitting the deterministic flow on nodes in the VPFP, a global scheduling slot number of each of the outgoing interfaces for scheduling and transmitting the deterministic flow, and an amount of data transmitted when the deterministic flow is scheduled in a scheduling slot corresponding to the global scheduling slot number; wherein global scheduling slot numbers are obtained by numbering scheduling slots in each of scheduling-calendars in an orchestrating-calendar, and global slot numbers of any two scheduling slots are different; the orchestrating-calendar comprises $n$ scheduling-calendars, $n>1$; any one of the scheduling-calendars comprises $d$ scheduling slots configured for the outgoing interfaces on the network nodes to schedule and transmit the deterministic flow, $d>1$; the RRT comprises RRT entries corresponding to the global slot numbers, and any one of the RRT entries comprises: an identifier of the VPFC of the deterministic flow scheduled and transmitted in a scheduling slot corresponding to a global slot number corresponding to the RRT entry or an identifier of a virtual periodic forwarding channel queue (VQ) allocated to the VPFC, and an amount of data of the deterministic flow scheduled and transmitted in the scheduling slot;

scheduling, by the node as the head node in the VPFP of the deterministic flow, deterministic data satisfying the amount of data cached in the VQ allocated to the VPFC to a corresponding forwarding queue based on the identifier of the VPFC in an RRT entry or the identifier of the VQ allocated to the VPFC and the amount of data.

7. The method according to claim 6, wherein the method further comprises: receiving, by the node, a deterministic data message; and when the node is the head node of the deterministic flow to which the deterministic data message belongs, caching the deterministic data message in the VQ allocated to the VPFC of the deterministic flow;

scheduling deterministic data, satisfying the amount of data, cached in the VQ allocated to the VPFC to a corresponding forwarding queue according to the identifier of the VPFC in an RRT entry or the identifier of the VQ allocated to the VPFC and the amount of data comprises:

in a current slot, determining, in the RRT, a target RRT entry corresponding to a next slot relative to the current slot; wherein the current slot is a timeslot corresponding to a global slot number currently indicated by a slot counter, the slot counter indicates a global slot number every slot interval, the slot counter is allowed to indicate a number $M$ of global slot numbers, $M$ represents a product of $n$ and $d$, and the slot counter is reset every $M$ slot intervals; the next slot is a timeslot corresponding to a next global slot number indicated by the slot counter;

acquiring, based on the identifier of the VPFC in the target RRT entry or the identifier of the VQ and the amount of data, at least one deterministic data message from the VQ corresponding to the identifier, wherein an amount of data of the acquired at least one deterministic data message is smaller than or equal to the amount of data in the target RRT entry; for each of the acquired at least one deterministic data message, determining whether the deterministic data message is an expired message based on a receiving moment when the deterministic data message is received and a current moment; and if the deterministic data message is not the expired message, storing the deterministic data message to the corresponding forwarding queue.

8. The method according to claim 7, wherein for each of the acquired at least one deterministic data message, determining whether the deterministic data message is an expired message based on a receiving moment when the deterministic data message is received and a current moment comprises:

for each of the acquired at least one deterministic data message, calculating a time difference between the receiving moment when the deterministic data message is received and the current moment, checking whether the time difference is greater than a time delay required by the deterministic flow to which the deterministic data message belongs; and if the time difference is greater than the time delay, determining the deterministic data message as the expired message; and if the time difference is less than or equal to the time delay, determining that the deterministic data message is not the expired message.

9. The method according to claim 7, wherein the method further comprises:

in the current slot, mapping the global slot number of the current slot to a corresponding scheduling slot configured for an outgoing interface, for scheduling and transmitting the deterministic data message, on the node; and scheduling the deterministic data message in the forwarding queue corresponding to the scheduling slot.

10. The method according to claim 9, wherein the d scheduling slots configured for the outgoing interfaces to schedule and transmit the deterministic flow correspond to d indexes of sending queue (ISQ), $d$ is even; every $d$ RRT entries in the RRT form a group, and RRT entries in each group are configured with corresponding ISQs in sequence; every 2 ISQs in the $d$ ISQs form a group, and ISQs in each group are mapped to corresponding physical queues in sequence, and different ISQs in each group are mapped to different physical queues;

the forwarding queue is a physical queue to which an ISQ corresponding to the target RRT entry is mapped to.

11. A deterministic flow transmission apparatus, wherein the apparatus is applied to a management control plane entity (MCPE), the MCPE is used to manage and control network nodes in a deterministic network, and the apparatus comprises:

an orchestrating unit, configured to determine an orchestrating-calendar for the network nodes in the deterministic network; wherein the orchestrating-calendar comprises $n$ scheduling-calendars, $n>1$; any one of the scheduling-calendars comprises $d$ scheduling slots configured for outgoing interfaces on the network nodes to transmit a deterministic flow, $d>1$; and

number the scheduling slots in the scheduling-calendars in the orchestrating-calendar to obtain global slot numbers of the scheduling slots; wherein global slot numbers of any two scheduling slots are different;

a control unit, configured to determine a virtual periodic forwarding channel (VPFC) of the deterministic flow according to the global slot numbers and a determined virtual periodic forwarding path (VPFP) of the deterministic flow; wherein the VPFC of the deterministic flow comprises: an identifier of the VPFP of the deterministic flow, the outgoing interfaces for scheduling and transmitting the deterministic flow on the nodes in the VPFP, a global scheduling slot number of each of the outgoing interfaces for scheduling and transmitting the deterministic flow, and an amount of data transmitted when the deterministic flow is scheduled in a scheduling slot corresponding to the global scheduling slot number; and

control a head node in the VPFP of the deterministic flow to create a resources registering table (RRT) based on the VPFC of the deterministic flow; wherein the RRT comprises RRT entries corresponding to the global slot numbers, and each of the RRT entries comprises: an identifier of the VPFC of the deterministic flow scheduled and transmitted in a scheduling slot corresponding to a global slot number corresponding to the RRT entry or an identifier of a virtual periodic forwarding channel queue (VQ) allocated to the VPFC, and an amount of data of the deterministic flow scheduled and transmitted in the scheduling slot; and each of the RRT entries is used to: according to the identifier of the VPFC in the RRT entry or the identifier of the VQ allocated to the VPFC and the amount of data, schedule deterministic data, satisfying the amount of data, cached in the VQ allocated to the VPFC to a corresponding forwarding queue.

12. The apparatus according to claim 11, wherein numbering the scheduling slots in the scheduling-calendars in the orchestrating-calendar to obtain global slot numbers of the scheduling slots comprises:

ranking the scheduling-calendars in a time sequence, and for each of the scheduling-calendars, if the scheduling-calendar is a first scheduling-calendar in the orchestrating-calendar, numbering the scheduling slots in the scheduling-calendar in sequence starting from a preset initial value; if the scheduling-calendar is not the first scheduling-calendar in the orchestrating-calendar, acquiring a start numbering value by adding a preset value on a number of a last scheduling slot in a previous scheduling-calendar, and numbering the scheduling slots in the scheduling-calendar in sequence starting from the start numbering value.

13. The apparatus according to claim 11, wherein a global scheduling slot number, for scheduling and transmitting the deterministic flow, of an outgoing interface, for scheduling and transmitting the deterministic flow, on any one node in the VPFP of the deterministic flow is determined by:

$$y = (x+k) \bmod M;$$

wherein y represents the global scheduling slot number, for scheduling and transmitting the deterministic flow, of the outgoing interface, for scheduling and transmitting the deterministic flow, on a current node, and the current node represents any one node in the VPFP of the deterministic flow except for the head node; x represents a global scheduling slot number, for scheduling and transmitting the deterministic flow, of an outgoing interface, for scheduling and transmitting the deterministic flow, on a previous node relative to the current node, x ranges according to $\{x \mid 0 \le x < M, x$ belongs to a natural number$\}$; k is a calibrated value corresponding to the current node, adjacent nodes in the VPFP correspond to a same value or different values of k, k ranges according to $\{k \mid 0 \le k < d, k$ belongs to a natural number$\}$; and M represents a product of n and d.

14. The apparatus according to claim 13, wherein the calibrated value k corresponding to the current node is determined according to an offset between scheduling slots, for scheduling and transmitting the deterministic flow, of outgoing interfaces, for scheduling and transmitting the deterministic flow, of the current node and the previous node;

wherein the offset is determined by:

$$\text{Offset} = (d+j-i) \% d;$$

wherein i represents a scheduling slot, for scheduling and transmitting the deterministic flow, of the outgoing interface, for scheduling and transmitting the deterministic flow, on the previous node relative to the current node; and j represents a scheduling slot, for scheduling and transmitting the deterministic flow, of the outgoing interface, for scheduling and transmitting the deterministic flow, on the current node.

15. The apparatus according to claim 11, wherein a number of RRT entries in the RRT is M, and M represents a product of n and d;

in the RRT, a first RRT entry corresponds to a smallest global slot number, a second RRT entry corresponds to a second-smallest global slot number, ..., and a last RRT entry corresponds to a greatest global slot number.

16. A deterministic flow transmission apparatus, wherein the apparatus is applied to a network node in a deterministic network, and the apparatus comprises:

an entry unit, configured to, when the network node is a head node in a virtual periodic forwarding path (VPFP) of a deterministic flow, create a resources registering table (RRT) based on a virtual periodic forwarding channel (VPFC) of the deterministic flow under control of a management control plane entity (MCPE); the VPFC of the deterministic flow comprises: an identifier of the VPFP of the deterministic flow, outgoing interfaces for scheduling and transmitting the deterministic flow on nodes in the VPFP, a global scheduling slot number of each of the outgoing interfaces for scheduling and transmitting the deterministic flow, and an amount of data transmitted when the deterministic flow is scheduled in a scheduling slot corresponding to the global scheduling slot number; wherein global scheduling slot numbers are obtained by numbering scheduling slots in each of scheduling-calendars in an orchestrating-calendar, and global slot numbers of any two scheduling slots are different; the orchestrating-calendar comprises $n$ scheduling-calendars, $n>1$; any one of the scheduling-calendars comprises $d$ scheduling slots configured for the outgoing interfaces on the network nodes to schedule and transmit the deterministic flow, $d>1$; the RRT comprises RRT entries corresponding to the global slot numbers, and any one of the RRT entries comprises: an identifier of the VPFC of the deterministic flow scheduled and transmitted in a scheduling slot corresponding to a global slot number corresponding to the RRT entry or an identifier of a virtual periodic forwarding channel queue (VQ) allocated to the VPFC, and an amount of data of the deterministic flow scheduled and transmitted in the scheduling slot;
a message-processing unit, configured to, when the network node is the head node in the VPFP of the deterministic flow, schedule deterministic data, satisfying the amount of data, cached in the VQ allocated to the VPFC to a corresponding forwarding queue based on the identifier of the VPFC in an RRT entry or the identifier of the VQ allocated to the VPFC and the amount of data.

17. The apparatus according to claim 16, wherein the message-processing unit is further configured to receive, at the node, a deterministic data message; and when the node is the head node of the deterministic flow to which the deterministic data message belongs, cache the deterministic data message in the VQ allocated to the VPFC of the deterministic flow;
scheduling deterministic data, satisfying the amount of data, cached in the VQ allocated to the VPFC to a corresponding forwarding queue according to the identifier of the VPFC in an RRT entry or the identifier of the VQ allocated to the VPFC and the amount of data comprises:

in a current slot, determining, in the RRT, a target RRT entry corresponding to a next slot relative to the current slot; wherein the current slot is a timeslot corresponding to a global slot number currently indicated by a slot counter, the slot counter indicates a global slot number every slot interval, the slot counter is allowed to indicate a number $M$ of global slot numbers, $M$ represents a product of $n$ and $d$, and the slot counter is reset every $M$ slot intervals; the next slot is a timeslot corresponding to a next global slot number indicated by the slot counter;
acquiring, based on the identifier of the VPFC in the target RRT entry or the identifier of the VQ and the amount of data, at least one deterministic data message from the VQ corresponding to the identifier, wherein an amount of data of the acquired at least one deterministic data message is smaller than or equal to the amount of data in the target RRT entry; for each of the acquired at least one deterministic data message, determining whether the deterministic data message is an expired message based on a receiving moment when the deterministic data message is received and a current moment; and if the deterministic data message is not the expired message, storing the deterministic data message to the corresponding forwarding queue.

18. The apparatus according to claim 17, wherein for each of the acquired at least one deterministic data message, determining whether the deterministic data message is an expired message based on a receiving moment when the deterministic data message is received and a current moment comprises: for each of the acquired at least one deterministic data message, calculating a time difference between the receiving moment when the deterministic data message is received and the current moment, checking whether the time difference is greater than a time delay required by the deterministic flow to which the deterministic data message belongs; and if the time difference is greater than the time delay, determining the deterministic data message as the expired message; and if the time difference is less than or equal to the time delay, determining that the deterministic data message is not the expired message.

19. The apparatus according to claim 17, wherein the message-processing unit is further configured to, in the current slot, map the global slot number of the current slot to a corresponding scheduling slot configured for an outgoing interface, for scheduling and transmitting the deterministic data message, on the node; and schedule the deterministic data message in the forwarding queue corresponding to the scheduling slot.

20. The apparatus according to claim 19, wherein the d scheduling slots configured for the outgoing interfaces to schedule and transmit the deterministic flow correspond to $d$ indexes of sending queue (ISQ), $d$ is even; every $d$ RRT entries in the RRT form a group, and RRT entries in each group are configured with corresponding ISQs in sequence; every 2 ISQs in the $d$ ISQs form a group, and ISQs in each group are mapped to corresponding physical queues in sequence, and different ISQs in each group are mapped to different physical queues;
the forwarding queue is a physical queue to which an ISQ corresponding to the target RRT entry is mapped to.

21. An electronic device, comprising: a processor and a machine-readable storage medium;

wherein the machine-readable storage medium stores a machine-executable instruction executable by the processor;
the processor is configured to execute the machine-executable instruction to implement the method according to any one of claims 1-10.

22. A machine-readable storage medium, wherein the machine-readable storage medium stores a machine-executable instruction executable by a processor;
the machine-executable instruction is executed by the processor to implement the method according to any one of claims 1-10.

Que 0

Que 1

...

...

Que d

FIG. 1

/201

Determine an orchestrating-calendar for network nodes

/202

Number scheduling slots in scheduling-calendars in the orchestrating-calendar to obtain global slot numbers of the scheduling slots

/203

Determine a VPFC of the deterministic flow based on the global slot numbers and a determined VPFP of the deterministic flow

FIG. 2

Orchestrating-calendar

d Scheduling-calendar

d Scheduling-calendar

Scheduling Slot d

Scheduling Slot 1

Scheduling Slot 0

Scheduling Slot d

Scheduling Slot 1

Scheduling Slot 0

Scheduling Slot d

Scheduling Slot 1

Scheduling Slot 0

Que 0

Que 1

d Scheduling queues

...

Que d

FIG. 3

Length 10*10 Orchestrating-calendar

Length 10 Scheduling-calendar

Length 10 Scheduling-calendar

Orchestrating Slot 9

Scheduling Slot 1

Scheduling Slot 0

Scheduling Slot 9

Scheduling Slot 1

Scheduling Slot 0

Scheduling Slot 9

Scheduling Slot 1

Scheduling Slot 0

Resources for Cycle 0~99

Planning Function: y=(x+k) mod 100

MCPE

Node1 → Node2 → Node3 → ...

VPFPs

Que 0

Que 1

...

Que 9

10 Scheduling queues

VPFP&VPFC

RRT:Resource Registering Table

Network Node

100-Cycle RRT

Scheduling Queues

Scheduling Queues

Head node of VPFP

Non-head node of VPFP

FIG. 4

Globe Slot Number of Orchestrating-calendar

Index of Elastic Queue

Number of resources

| | | | | | | | |
|---|---|---|---|---|---|---|---|
| Slot0 | ISQ0 | VQ0 | 1 | VQ1 | 1 | VQm | 1 | ... |
| Slot1 | ISQ1 | VQ0 | 1 | VQ1 | 1 | X | 0 | ... |
| Slot2 | ISQ2 | VQm | 1 | X | 0 | X | 0 | ... |
| ... | ... | | | | | | | |
| Slot99 | ISQ9 | X | 1 | X | 0 | X | 0 | ... |

RRT

FIG. 5

601

Create, by a node as a head node in a VPFP of a deterministic flow, an RRT based on a VPFC of the deterministic flow under control of an MCPE

602

Schedule, by the node as the head node in the VPFP of the deterministic flow, deterministic data satisfying the amount of data cached in the VQ allocated to the VPFC to a corresponding forwarding queue based on the identifier of the VPFC in an RRT entry or the identifier of the VQ allocated to the VPFC and the amount of data

FIG. 6

FIG. 7

Orchestrating unit

Control unit

Apparatus

FIG. 8

Entry unit

Message-processing unit

Apparatus

FIG. 9

Processor

Machine-readable
storage medium

Machine-executable
instruction

FIG. 10

## INTERNATIONAL SEARCH REPORT

| International application No. |
|---|
| **PCT/CN2023/104099** |

**A. CLASSIFICATION OF SUBJECT MATTER**

H04L47/56(2022.01)i

According to International Patent Classification (IPC) or to both national classification and IPC

**B. FIELDS SEARCHED**

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT; VEN; CNKI; ENTXTC; IEEE Xplore; IETF: 确定性, 确定性流, 编排日历, 调度日历, 虚拟周期性转发, 虚拟队列, 全局时隙, 时分复用, 资源注册表, DetNet, Deterministic, Orchestrating-calendar, Scheduling-calendar, global timeslot, VPFP, VPFC, queue, TDM, RRT, VQ

**C. DOCUMENTS CONSIDERED TO BE RELEVANT**

| Category* | Citation of document, with indication, where appropriate, of the relevant passages | Relevant to claim No. |
|---|---|---|
| A | GUO, Daorong et al. "Deterministic Networking (DetNet) Controller Plane - VPFC Planning Scheme Based on VPFP in Large-scale Deterministic Networks" *Internet-Draft:draft-guo-detnet-vpfc-planning-01*, 16 February 2023 (2023-02-16), pages 1-41 | 1-22 |
| A | CN 115037399 A (ZTE CORP.) 09 September 2022 (2022-09-09) entire document | 1-22 |
| A | CN 115242728 A (H3C HOLDINGS LTD.) 25 October 2022 (2022-10-25) entire document | 1-22 |
| A | CN 115567456 A (BEIJING UNIVERSITY OF POSTS AND TELECOMMUNICATIONS) 03 January 2023 (2023-01-03) entire document | 1-22 |
| A | US 2021021510 A1 (CISCO TECHNOLOGY INC.) 21 January 2021 (2021-01-21) entire document | 1-22 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 December 2023** | **11 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/104099**

| Patent document cited in search report | | | Publication date (day/month/year) | Patent family member(s) | Publication date (day/month/year) |
|---|---|---|---|---|---|
| CN | 115037399 | A | 09 September 2022 | None | |
| CN | 115242728 | A | 25 October 2022 | None | |
| CN | 115567456 | A | 03 January 2023 | None | |
| US | 2021021510 | A1 | 21 January 2021 | None | |

Form PCT/ISA/210 (patent family annex) (July 2022)